Europäisches Patentamt

European Patent Office

Office européen des brevets

(11) Veröffentlichungsnummer: **0 314 868**
**A2**

# EUROPÄISCHE PATENTANMELDUNG

(21) Anmeldenummer: 88108651.6

(22) Anmeldetag: 31.05.88

(51) Int. Cl.⁴: **A47J 31/02 , A47J 31/06**

(30) Priorität: 03.11.87 DE 3737203

(43) Veröffentlichungstag der Anmeldung:
**10.05.89 Patentblatt 89/19**

(84) Benannte Vertragsstaaten:
**AT BE CH DE ES FR GB GR IT LI LU NL SE**

(71) Anmelder: **Melitta-Werke Bentz & Sohn**
**Ringstrasse 99**
**D-4950 Minden 1(DE)**

(72) Erfinder: **Chan, Kwan Woon**
**69, Pok Fu Lam Road, 11/Fl. Blk. B**
**King Ming Mansion, West Point(HK)**

(74) Vertreter: **Stracke, Alexander, Dipl.-Ing. et al**
**Jöllenbecker Strasse 164**
**D-4800 Bielefeld 1(DE)**

(54) **Vorrichtung zur Herstellung von Aromaauszügen aus Kaffee oder Tee.**

(57) Eine Vorrichtung zur Herstellung von Aromaauszügen aus Kaffe oder Tee, umfassend einen Sammelbehälter (2) für das Filtrat sowie einen auf den Sammelbehälter (2) aufsetzbares Filtergefäß (1) zur Aufnahme von Kaffeemehl oder Tee soll so gestaltet werden, daß sich eine kippsichere und praxisgerechte, dennoch aber leicht lösbare Verbindung zwischen Filtergefäß (1) und Sammelbehälter (2) ergibt.

Dies wird dadurch erreicht, daß das Filtergefäß (1) im Bereich seines auf den Sammelbehälter (2) aufsetzbaren Stutzens (3) mit Rastnocken (7 u. 8) versehen ist, welche in entsprechende Hinterschneidungen oder Aussparungen des oberen Randes des Sammelbehälters (2) eingreifen.

Hierdurch wird einerseits eine kippsichere Verbindung zwischen Filtergefäß (1) und Sammelbehälter (2) und andererseits eine leichte Demontagemöglichkeit für die beiden vorgenannten Bauteile bewirkt.

Fig. 5

## Vorrichtung zur Herstellung von Aromaauszügen aus Kaffee oder Tee

Die vorliegende Erfindung betrifft eine Vorrichtung zur Herstellung von Aromaauszügen aus Kaffee oder Tee, umfassend einen Sammelbehälter für das Filtrat sowie ein auf den Sammelbehälter aufsetzbares Filtergefäß zur Aufnahme von Kaffeemehl oder Tee.

Vorrichtungen der vorerwähnten Art sind ansich bekannt.

Derartige Vorrichtungen werden sowohl beim Filtern im manuellen Betrieb wie auch bei Kaffee- oder Teemaschinen benötigt.

In das Filtergefäß, in welches im allgemeinen ein Papierfilter eingesetzt wird, wird das Kaffeemehl oder der Tee eingefüllt und dann Brühwasser in das Filtergefäß eingeleitet. Das Brühwasser nimmt durch den Kontakt mit dem Kaffeemehl oder dem Tee Aromastoffe auf und fließt dann als Filtrat in den unterhalb des Filtergefäßes angeordneten Sammelbehälter.

Im manuellen Filtrationsbetrieb wird das Filtergefäß in jedem Falle auf den Sammelbehälter aufgesetzt.

Bei Kaffee- oder Teemaschinen hingegen sind auch Konstruktionen bekannt, bei denen das Filtergefäß am Gehäuse der Kaffee- oder Teemaschine festgelegt wird.

Im Rahmen der vorliegenden Erfindung interessieren allerdings nur solche Vorrichtungen, bei denen das Filtergefäß unmittelbar auf den Sammelbehälter aufgesetzt werden, solche Konstruktionen werden auch bei Kaffee- oder Teemaschinen verwendet.

Bei den vorbekannten Konstruktionen besteht die Gefahr, daß das Filtergefäß vom Sammelbehälter heruntergestoßen werden kann, insbesondere bei nachlässiger Handhabung bei manuellem Filtrationsbetrieb.

Der vorliegenden Erfindung liegt die Aufgabe zugrunde, eine Vorrichtung der gattungsgemäßen Art so zu gestalten, daß ein unbeabsichtigtes Lösen des Filtergefäßes vom Sammelbehälter verhindert wird.

Diese Aufgabe wird erfindungsgemäß dadurch gelöst, daß das Filtergefäß in seinem auf den Sammelbehälter aufsetzbaren Bereich mit Rastnocken versehen ist, welche entsprechende Hinterschneidungen oder Rastaufnehmungen im oberen Randbereich des Sammelbehälters hintergreifen.

Durch eine derart vergleichsweise einfache Konstruktion wird eine sichere und dennoch lösbare Verbindung zwischen Filtergefäß und Sammelbehälter möglich, so daß nach dem korrekten Aufsetzen des Filtergefäßes auf den Sammelbehälter eine Baueinheit besteht, durch die die Gefahr des unbeabsichtigten Lösens des Filtergefäßes vom Sammelbehälter vermieden ist.

Zu Reinigungszwecken bzw. zur bequemeren Handhabung des Sammelbehälters nach Beendigung des Filtrationsvorganges kann hingegen das Filtergefäß durch bewußte Manipulation wieder vom Sammelbehälter gelöst werden, hierzu sind lediglich die Rastnocken aus ihren Raststellungen heraus zu bewegen.

Weitere Merkmale der Erfindung sind Gegenstand von Unteransprüchen.

In der beigefügten Zeichnung ist ein Ausführungsbeispiel der Erfindung dargestellt, welches im folgenden näher beschrieben wird. Es zeigen:

Fig. 1 eine Ansicht eines Filtergefäßes für eine erfindungsgemäße Vorrichtung

Fig. 2 die in Fig. 1 mit II bezeichnete Einzelheit in vergrößerter Schnittdarstellung

Fig. 3 eine Teilansicht in Richtung des Pfeiles III in Fig. 1

Fig. 4 eine Teilansicht in Richtung des Pfeiles IV in Fig. 1

Fig. 5 die aus Filtergefäß gem. Fig. 1 und einem Sammelbehälter, auf welches das Filtergefäß aufgesetzt ist, bestehende Vorrichtung zur Herstellung von Aromaauszügen aus Kaffee oder Tee, wobei das Sammelgefäß im Schnitt dargestellt ist

Fig. 6 eine Schnittdarstellung des Deckels des Sammelgefäßes gem. Fig. 5

Fig. 7 eine Ansicht in Richtung des Pfeiles VII in Fig. 6

Fig. 8 eine Teilansicht in Richtung des Pfeiles VIII in Fig. 5

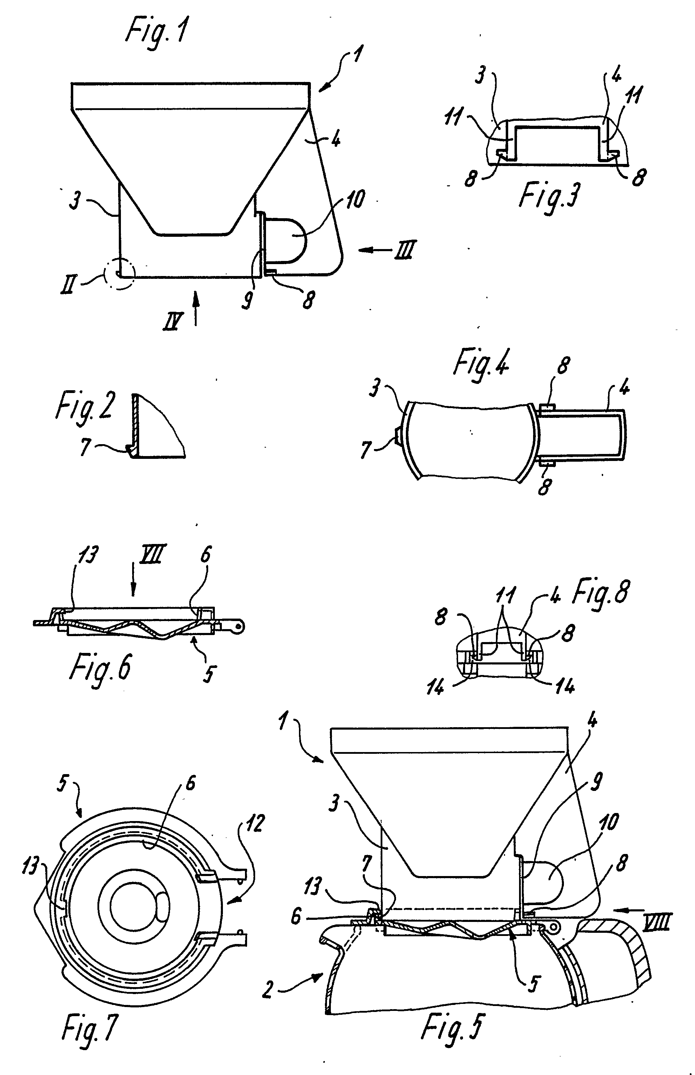

In Fig. 1 ist ein Filtergefäß 1 dargestellt, welches, wie Fig 5 deutlich zeigt, auf einen Sammelbehälter 2, beispielsweise in Form einer Glaskanne, aufsetzbar ist und gemeinsam mit diesem Sammelbehälter 2 eine Vorrichtung zur Herstellung von Aromaauszügen aus Kaffee oder Tee bildet.

Das Filtergefäß 1 ist im wesentlichen kegelförmig ausgebildet und an seinem unteren Ende mit einem Stutzen 3 versehen, welcher zum Aufsetzen auf den Sammelbehälter 2 dient.

Weiterhin ist das Filtergefäß 1 mit einem angeformten Handgriff 4 ausgestattet.

Der Sammelbehälter 2 ist mit einem Deckel 5 ausgestattet, der vorzugsweise aus Kunststoff gefertigt ist und einen Zentrierring 6 aufweist, in welchem der Stutzen 3 des Filtergefäßes 1 teilweise eingesetzt werden kann.

Der Stutzen 3 des Filtergefäßes 1 ist in seinem unteren Randbereich an einer dem Handgriff 4 diametral gegenüberliegenden Stelle mit einem ersten Rastnocken 7 ausgestattet.

Zwei weitere Rastnocken 8 sind am Handgriff 4 angeformt, und zwar ebenfalls am unteren Rand des Handgriffes 4, vorzugsweise in der gleichen Ebene wie der erste Rastnocken 7.

Der Handgriff 4 ist in seinem unteren Endbereich durch einen Schlitz 9 vom Stutzen 3 getrennt und in diesem unteren Bereich als U-förmiges Hohlteil ausgebildet, was Fig. 4 besonders deutlich macht.

Im hohl ausgebildeten Bereich ist der Handgriff 4 seitlich mit Griffmulden 10 ausgestattet, welcher ein Zusammendrücken der Seitenflanken 11 des hohl ausgebildeten Griffbereiches ermöglichen.

Die an den erwähnten Seitenflanken 11 des Handgriffes 4 angeformten, tangential zum Stutzen 3 verlaufenden Rastnocken 8 können somit in ihrem Abstand zueinander verändert werden.

Der Deckel 5 des Sammelbehälters 2 ist einerseits mit einer Zentrierausnehmung 12 für den Handgriff 4 des Filtergefäßes 1 und diametral gegenüberliegender Stelle mit einem Rastvorsprung 13 versehen, der bei aufgesetztem Filtergefäß 1 von dem Rastnocken 7 des Stutzens 3 untergriffen ist.

An den beiden Seitenflanken der Zentrieraussparung 12 ist der Deckel 5 mit Aussparungen 14 versehen, in welche die an den Seitenflanken 11 des Handgriffes 4 angeformten Rastnocken 8 einrastbar sind.

Durch die dreifache Rastung wird eine sichere Festlegung des Filtergefäßes 1 am Sammelbehälter 2 ermöglicht, da der Deckel 5 selbstverständlich fest am Sammelbehälter 2 angeschlossen ist.

Eine bewußte Abnahme des Filtergefäßes 1 kann durch Zusammendrücken der im Hohlbereich liegenden Seitenflanken 11 des Handgriffes 4 und der damit verbundenen Aufhebung der Rastung zwischen Rastnocken 8 und Rastaussparungen 14 erfolgen.

Grundsätzlich ist es möglich, abweichend vom dargestellten Ausführungsbeispiel, die rastende Festlegung und damit kippsichere Verbindung zwischen Filtergefäß 1 und Sammelbehälter 2 auch ohne einen Deckel 5 zu bewirken, indem nämlich der obere Rand des Sammelbehälters 2 direkt mit entsprechenden Rastnocken und Rastaussparungen ausgestattet wird, in welche die Rastnocken des Filtergefäßes 1 eingreifen können.

Im allgemeinen ist es aber zweckmäßig, die im Ausführungsbeispiel gezeigte Lösung mit einem zusätzlichen Deckel zu wählen, einerseits deshalb, weil die Verwendung eines Deckels für den Sammelbehälter 2 nach Abnahme des Filtergefäßes 1 ohnehin sinnvoll ist und zum anderen deshalb, weil derartige Deckel aus Kunststoff gefertigt und somit in einfache Art und Weise mit den entsprechenden Rastmitteln versehen werden können.

Die erfindungsgemäße Vorrichtung kann sowohl zur Herstellung von Aromaauszügen aus Kaffee oder Tee im manuellen Betrieb wie auch im automatischen Betrieb, d.h., bei Kaffee- oder Teemaschinen, eingesetzt werden.

## Ansprüche

1. Vorrichtung zur Herstellung von Aromaauszügen aus Kaffee oder Tee, umfassend einen Sammelbehälter für das Filtrat sowie ein auf den Sammelbehälter aufsetzbares Filtergefäß zur Aufnahme von Kaffeemehl oder Tee, **dadurch gekennzeichnet,** daß das Filtergefäß (1) in seinem auf den Sammelbehälter (2) aufsetzbaren Bereich mit Rastnocken (7, 8) versehen ist, welche entsprechende Hinterschneidungen oder Rastausnehmungen (14) im oberen Randbereich des Sammelbehälters (2) hintergreifen.

2. Vorrichtung nach Anspruch 1, dadurch gekennzeichnet, daß die Rastausnehmungen (14) oder Hinterschneidungen im Bereich eines Zentrierringes (6) für einen am Filtergefäß (1) angeformten Stutzen (3) angeformt sind.

3. Vorrichtung nach Anspruch 2, dadurch gekennzeichnet, daß der Zentrierring (6) Bestandteil eines aus Kunststoff gefertigten und mit dem Sammelbehälter (2) fest verbundenen Deckels (5) ist.

4. Vorrichtung nach einem oder mehreren der Ansprüche 1 bis 3, dadurch gekennzeichnet, daß an das Filtergefäß (1) ein Handgriff (4) angeformt ist, der im Bereich des Stutzens (3) durch einen Schlitz (9) von diesem Stutzen (3) getrennt ist und in seinem unteren Endbereich als Hohlteil ausgebildet sowie im Außenbereich der den Hohlteil umschließenden Seitenflanken (11) mit tangential zum Stutzen (3) verlaufenden Rastnocken (8) versehen ist.

5. Vorrichtung nach Anspruch 4, dadurch gekennzeichnet, daß dem Handgriff (4) diametral gegenüberliegend am unteren Endbereich des Stutzens (3) ein weiterer Rastnocken (7) angeformt ist.

6. Vorrichtung nach einem oder mehreren der Ansprüche 1 bis 5, dadurch gekennzeichnet, daß der Deckel (5) oder der obere Randbereich des Sammelbehälters (2) eine Zentrierausnehmung (12) für den Handgriff (4) aufweist.

7. Vorrichtung nach einem oder mehreren der Ansprüche 1 bis 6, dadurch gekennzeichnet, daß der Handgriff (4) in seinem Hohlbereich mit Griffmulden (10) versehen ist, mittels derer die die Rastnocken (8) tragenden Seitenflanken (11) zusammendrückbar sind.

Fig.1

Fig.3

Fig.2

Fig.4

Fig.6

Fig.8

Fig.7

Fig.5